# EUROPÄISCHE PATENTSCHRIFT

(11) **EP 0 351 526 B1**
(45) Veröffentlichungstag und Bekanntmachung des Hinweises auf die Patenterteilung: **03.11.1993**
(21) Anmeldenummer: 89109962.4
(22) Anmeldetag: 01.06.1989
(51) Int. Cl.: B65G 1/02, B65G 1/04, B65G 47/24

(54) **Verfahren und Lagerregal zum horizontalen Lagern von Papierrollen**
Method and ware house for the horizontal storage of paperrolls
Méthode et rayonnage pour le stockage horizontal de rouleaux de papier

(30) Priorität: 18.07.1988 DE 3824328
(43) Veröffentlichungstag der Anmeldung: 24.01.1990
(73) Patentinhaber: KONE OY, 00330 Helsinki 33 (FI)
(72) Erfinder: Hilber, Walther, Dr. Ing., D-8900 Augsburg (DE)
(74) Vertreter: Zipse + Habersack

(56) Entgegenhaltungen:
- DE-A- 3 504 141
- FR-A- 2 050 254
- US-A- 4 062 456
- US-A- 4 268 207

## Beschreibung

Die Erfindung betrifft ein Verfahren sowie ein Lagerregal zum horizontalen Lagern von Papierrollen gemäß dem Oberbegriff des Anspruchs 1 bzw. des Anspruchs 5.

Das horizontale Lagern von Papierrollen in einem Lagerregal wird in den älteren deutschen Patentanmeldungen P 37 41 411.9 und P 38 09 943.8-22 beschrieben. Die Papierrollen werden unmittelbar, d.h. ohne Zuhilfenahme von Paletten, längs eines Mantelsegments auf einer entsprechend diesem Mantelsegment eingewölbten Auflagefläche abgelegt, die zwischen den Schienen eines in die einzelnen Lagerfächer ein- und ausfahrbaren Transportwagens gebildet ist. Da Papierrollen, wie sie für die Weiterverarbeitung im Druckgewerbe benötigt werden, im allgemeinen mehrere Tonnen schwer sind, kann eine Lagerung längs eines Mantelsegments durch das Gewicht der Rolle zumindest nach einiger Lagerzeit zu einer unerwünschten Umfangsabplattung führen, die bei der späteren Verarbeitung der Papierrolle bei hohen Rotationsgeschwindigkeiten eine unerwünschte Unwucht zur Folge hätte. Um eine solche Umfangsabplattung möglichst sicher zu vermeiden, wurde gemäß der genannten deutschen Patentanmeldung P 38 09 943.8 vorgeschlagen, die Auflagefläche soweit elastisch zu gestalten, daß durch das Gewicht der abgelegten Papierrolle eine Verformung der Auflagefläche elastischer Art eintrifft, die eine Anpassung der Auflage an den Umfang der Papierrolle bewirkt.

Der vorliegenden Erfindung liegt die Aufgabe zugrunde, ein Verfahren zu schaffen und ein Lagerregal so auszubilden, daß auch bei langen Lagerzeiten selbst weich gewickelter Papierrollen bleibende Umfangsabplattungen sicher ausgeschlossen werden.

Diese Aufgabe wird erfindungsgemäß mit einem Verfahren gemäß Anspruch 1 bzw. mit einem Lagerregal gemäß Anspruch 5 gelöst. Weiterbildungen der Erfindung sind in den Unteransprüchen beschrieben.

Nach der Erfindung ist vorgesehen, daß die Papierrollen jeweils nach einer bestimmten Lagerzeit um einen bestimmten Drehwinkel gedreht werden, wonach sie in veränderter Drehlage weiter gelagert werden. Das Drehen der Papierrollen erfolgt, ohne daß sie aus den Lagerfächern aus- und wieder eingelagert werden müssen. Das Drehen erfolgt zweckmäßig nach einem auf bestimmte Rollenparameter wie Größe, Gewicht, Material, Wickelhärte abgestimmten Programm, um die Rundheit der Papierrollen auch nach langer Lagerzeit optimal zu bewahren.

Das Drehen der Papierrollen kann unmittelbar auf ihrer Auflagefläche erfolgen. Zu diesem Zweck weist die Papierrollenauflage längs zweier Mantellinien der gelagerten Papierrollen verlaufende, drehbar gelagerte Stützwellen auf, um die Traggurte für die Papierrollen elastisch gespannt sind. Der Antrieb kann direkt über die Stützwellen oder aber über ein- und ausfahrbare Andruckrollen erfolgen. Diese Lösung erfordert eine entsprechende Ausgestaltung des gesamten Lagerregals bzw. einen Umbau bestehender Lagerregale.

Bevorzugt wird jedoch für ein Lagerregal, das in den Lagerfächern mit Fahrschienen für einen Transportwagen versehen ist, der von einer längs der Regalfront verfahrbaren Hubeinrichtung aus in die einzelnen Lagerfächer einfahrbar ist, eine Lösung, bei der das Drehen der Papierrollen durch den Transportwagen erfolgt. Das Lagerregal selbst kann bei dieser Lösung von üblichem Aufbau sein, d.h. die Fahrschienen sind durch eine der Krümmung der Papierrollen angepaßte stationäre Papierrollenauflage verbunden. Der Transportwagen seinerseits weist als Hubgabeln zwei drehbare Tragwellen auf und er ist mit einem Drehantrieb zum Angriff am Mantelumfang der jeweils getragenen Papierrolle ausgerüstet. Dieser Drehantrieb greift vorteilhaft an den Tragwellen an, so daß die Papierrollen mittels der zwei motorisch drehbaren Tragwellen des Transportwagens von ihrer Auflagefläche abgehoben, gedreht und danach wieder auf ihrer Auflagefläche abgesetzt werden können.

Die Erfindung wird nachfolgend anhand eines Ausführungsbeispiels näher erläutert. Es zeigen
- Fig. 1: eine schematische Draufsicht eines Lagerregals zum horizontalen Lagern von Papierrollen,
- Fig. 2: einen Schnitt durch das Lagerregal der Fig. 1 längs der Linie II II,
- Fig. 3: die vergrößerte Darstellung des Teilschnitts III III in Figur 1, und
- Fig. 4: eine erneut vergrößerte Darstellung einer Fahrschiene eines Lagerfaches aus dem Teilschnitt der Figur 3 mit einem Transportwagen in erfindungsgemäßer Ausbildung.

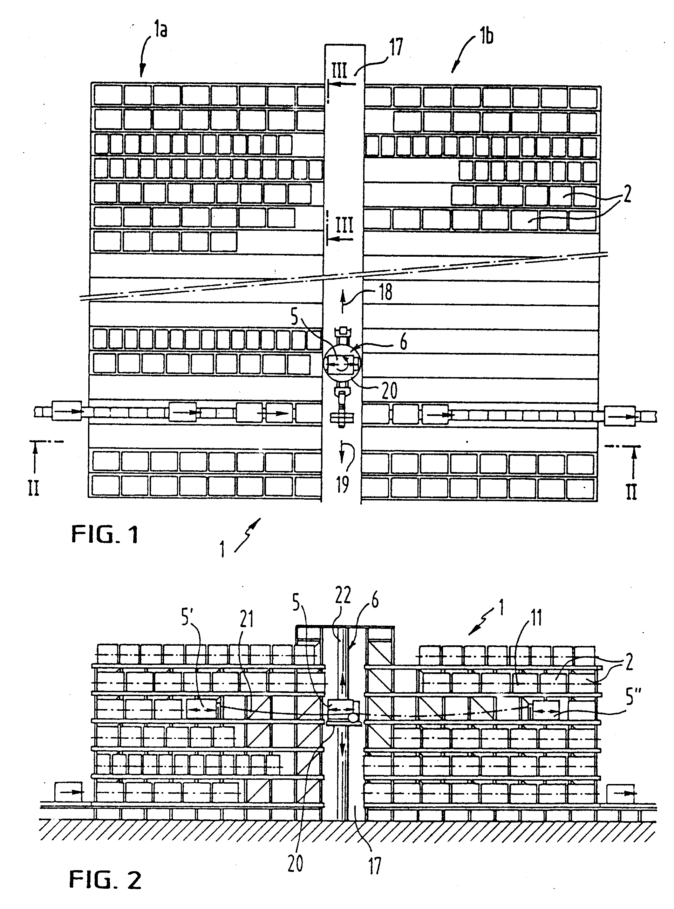

In den Figuren 1 und 2 ist ein Lagerregal 1 gezeigt, das aus zwei parallel zueinanderstehenden Lagerblöcken 1a und 1b und aus einem zwischen diesem verlaufenden Gang 17 besteht, in dem eine Hubeinrichtung 6 mit einem Drehteller 20 in Richtung der Pfeile 18 und 19 steuerbar hinund herfahrbar angeordnet ist. Auf dem Drehteller 20 dieser Hubeinrichtung 6 ist ein Transportwagen 5 angeordnet, der bei Erreichen des Niveaus eines bestimmten Lagerfaches selbsttätig in das Lagerfach zur Stellung 5′ bzw. 5˝ hineinfahren kann. Seine Energieversorgung erfolgt über ein der Hubeinrichtung 6 zugeordnetes Versorgungskabel 21. Der Drehteller 20 der Hubeinrichtung 6 ist längs eines Hubmastes 22 auch in der Höhe verfahrbar. Alle diese Fahrvorgänge des Transportwagens 5 und der Hubeinrichtung 6 können in bekannter Weise von einer zentralen Steuereinheit aus bestimmt werden.

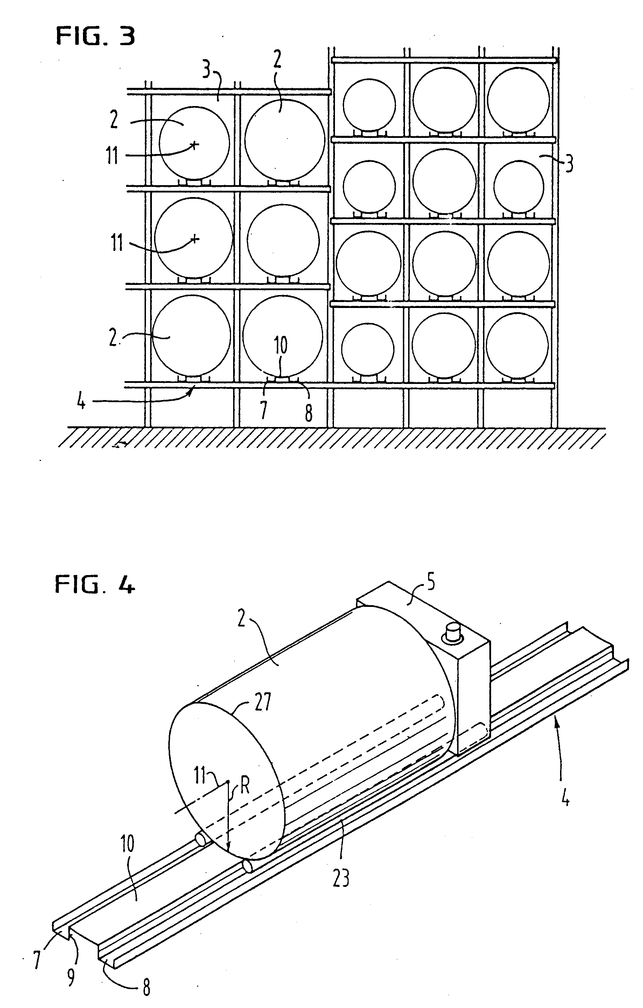

Aus den Figuren 3 und 4 wird deutlich, daß die Papierrollen 2, die in den Figuren 1 und 2 in ihrer Lage in den Lagerblöcken 1a und 1b angedeutet sind, liegend in den Lagerfächern 3 abgelegt sind, d.h., daß ihre Wickelachse 11 parallel zu den Böden 10 der Lagerfächer 3 und zu Fahrschienen 4 verläuft, die zur Führung des Transportwagens 4 in jedem der Lagerfächer 3 beidseitig der Böden 10 verlegt sind. Die Böden 10 bilden eine elastisch nachgiebige Auflagefläche mit einer dem Mantelumfang 27 der Papierrollen 2 angepaßten Einwölbung. Die Fahrschienen 4 sind, wie dargestellt, U-Profile 7 und 8, deren innere, einanderzugewandte Schenkel elastisch nachgiebige Tragstege 9 für die Böden 10 bilden.

Wie aus Figur 4 hervorgeht, ist der Transportwagen 5 mit Anhebearmen oder Hubgabeln 23 versehen, die in den U-Profilen 7 bzw. 8 der Fahrschienen 4 geführt sind. Die Hubgabeln 23 sind als zwei motorisch drehbare Tragwellen ausgebildet, so daß die angehobene Papierrolle 2 nach Anschalten des Drehantriebs um einen bestimmten Drehwinkel gedreht und danach wieder abgesetzt werden kann.

## Patentansprüche

1. Verfahren zum horizontalen Lagern von Papierrollen, insbesondere für das Druckgewerbe, gemäß dem die Papierrollen längs eines Mantelsegments von einer Auflagefläche abgestützt werden,
dadurch **gekennzeichnet,** daß die Papierrollen (2) jeweils nach einer bestimmten Lagerzeit um einen Drehwinkel gedreht und danach in veränderter Drehlage weiter gelagert werden.

2. Verfahren nach Anspruch 1,
dadurch **gekennzeichnet,** daß die Papierrollen (2) nach einem auf bestimmte Rollenparameter wie Größe, Gewicht, Material, Wickelhärte abgestimmten Programm gedreht werden, um die Rundheit der Papierrollen auch nach langer Lagerzeit optimal zu bewahren bzw. zu sichern.

3. Verfahren nach Anspruch 1 oder 2,
dadurch **gekennzeichnet,** daß die Papierrollen (2) auf ihrer Auflagefläche (10) gedreht werden.

4. Verfahren nach Anspruch 1 oder 2,
dadurch **gekennzeichnet,** daß die Papierrollen (2) von ihrer Auflagefläche (10) abgehoben, gedreht und danach wieder auf ihre Auflagefläche abgesetzt werden.

5. Lagerregal (1) zum horizontalen Lagern von Papierrollen (2), insbesondere für das Druckgewerbe, mit Auflageflächen (10) zur Abstützung der Papierrollen längs eines Mantelsegments,
**gekennzeichnet** durch einen Drehantrieb zum Angriff am Mantelumfang (27) einer gelagerten Papierrolle (2) mit einer Zeitsteuerung zwecks Drehung der Papierrolle um einen bestimmten Drehwinkel, und durch eine die Drehung der Papierrolle ermöglichende Papierrollenauflage.

6. Lagerregal nach Anspruch 5,
dadurch **gekennzeichnet,** daß die Papierrollenauflage längs zweier Mantellinien der gelagerten Papierrollen verlaufende, drehbar gelagerte Stützwellen aufweist, um die Traggurte für die Papierrollen elastisch gespannt sind.

7. Lagerregal nach Anspruch 5, das in den Lagerfächern mit Fahrschienen für einen Transportwagen (5) versehen ist, der Hubgabeln (22) besitzt und von einer längs der Regalfront verfahrbaren Hubeinrichtung aus in die einzelnen Lagerfächer einfahrbar ist, wobei die Fahrschienen (7,8) durch eine der Krümmung der Papierrollen (2) angepaßte Papierrollen-Auflagefläche (10) verbunden sind,
dadurch **gekennzeichnet,** daß der Transportwagen (5) als Hubgabeln (23) zwei drehbare Tragwellen aufweist und er mit einem Drehantrieb zum Angriff am Mantelumfang (27) der getragenen Papierrolle (2) aufgerüstet ist.

8. Lagerregal nach Anspruch 7,
dadurch **gekennzeichnet,** daß zwei motorisch drehbare Tragwellen (23) vorgesehen sind.

## Claims

1. Procedure for horizontal storage of paper rolls, especially for the printing trade, in which procedure the paper rolls are placed on a bearing surface supporting the roll by a segment of its outer layer, **characterized** in that the paper rolls (2) are rotated through an angle at certain intervals and stored further in a different rotational position.

2. Procedure according to claim 1, **characterized** in that the paper rolls (2) are rotated in accordance with a program based on certain roll parameters, such as size, weight, material and winding tightness, so as to optimally preserve their roundness even through long storage times.

3. Procedure according to claim 1 or 2, **characterized** in that the paper rolls (2) are rotated directly on their bearing surface (10).

4. Procedure according to claim 1 or 2, **characterized** in that the paper rolls (2) are lifted up from their bearing surface (10), rotated and then deposited again on the bearing surface.

5. Storage shelving assembly for horizontal storage of paper rolls, especially for the printing trade, provided with bearing surfaces supporting the paper rolls by a segment of their outer layer, **characterized** in that the shelving is provided with an actuator for applying a rotatory force to the circumference of the paper roll, employing time-based control to rotate the paper roll through a certain angle, and with a bearing surface that permits the rotation of the rolls.

6. Storage shelving assembly according to claim 5, **characterized** in that the bearing surface supporting the paper rolls is provided with two rotatable supporting shafts laid longitudinally along two lines at the circumference of the rolls in the storage corridor, with elastic belts stretched around the shafts to support the rolls.

7. Storage shelving assembly according to claim 5, in which the storage corridors are provided with running tracks for a transport carriage which (has a lifting fork and) can be driven into individual corridors in the shelving from a lifting apparatus movable along the front of the shelving, the running tracks being connected by a bearing surface adaptable to the curvature of the paper rolls, **characterized** in that the lifting fork (23) of the transport carriage (5) consists of two rotatable supporting shafts and that the transport carriage is provided with an actuator for applying a rotatory force to the circumference (27) of the paper roll (2) being carried.

8. Storage shelving assembly according to claim 7, **characterized** in that the transport carriage has two supporting shafts (23) rotatable by a motor.

## Revendications

1. Procédé pour le stockage horizontal de bobines de papier, notamment pour l'imprimerie, selon lequel les bobines de papier sont soutenues le long d'un segment d'enveloppe par une surface d'appui,
**caractérisé** en ce que les bobines de papier (2) sont chacune tournées d'un angle de rotation donné au bout d'un temps de stockage déterminé, puis continuent à être stockés dans la position de rotation modifiée.

2. Procédé selon la revendication 1,
**caractérisé** en ce que les bobines de papier (2) sont tournées d'après un programme basé sur des paramètres de bobine déterminés, tels que la taille, le poids, le matériau, la dureté du bobinage, afin de maintenir ou d'assurer de manière optimale la rotondité des bobines de papier même au bout d'un long temps de stockage.

3. Procédé selon la revendication 1 ou 2,
**caractérisé** en ce que les bobines de papier (2) sont tournées sur leur surface d'appui (10).

4. Procédé selon la revendication 1 ou 2,
**caractérisé** en ce que les bobines de papier (2) sont soulevées de leur surface d'appui (10), tournées puis reposées sur leur surface d'appui.

5. Rayonnage (1) pour le stockage horizontal de bobines de papier (2), notamment pour l'imprimerie, avec des surfaces d'appui (10) pour soutenir les bobines de papier le long d'un segment d'enveloppe,
**caractérisé** par un entraînement en rotation pour attaquer la périphérie d'enveloppe (27) d'une bobine de papier (2) stockée, avec une commande de temps pour faire tourner la bobine de papier d'un angle de rotation déterminé, et par un support de bobines de papier permettant la rotation des bobines de papier.

6. Rayonnage selon la revendication 5,
**caractérisé** en ce que le support de bobines de papier présente des arbres de soutien, montés à rotation et s'étendant le long de deux génératrices des bobines de papier stockées, autour desquels sont élastiquement tendues des sangles porteuses pour les bobines de papier.

7. Rayonnage selon la revendication 5, qui est pourvu dans ses compartiments de stockage de rails de roulement pour un chariot de transport (5), qui possède des fourches de levage (22) et peut être rentré dans les différents compartiments de stockage par un dispositif de levage pouvant être déplacé le long de la face avant du rayonnage. les rails de roulement (7, 8) étant reliées par une surface d'appui (10) de bobines de papier adaptée à la courbure des bobines de papier (2),
**caractérisé** en ce que le chariot de transport (5) présente comme fourches de levage (23) deux arbres porteurs rotatifs, et il est équipé d'un entraînement en rotation pour attaquer la périphérie d'enveloppe (27) des bobines de papier (2) portées.

8. Rayonnage selon la revendication 7,
**caractérisé** en ce qu'il est prévu deux arbres porteurs (23) à rotation motorisée.
